# EUROPEAN PATENT SPECIFICATION

(11) **EP 2 517 289 B1**
(45) Date of publication and mention of the grant of the patent: **03.08.2016**
(21) Application number: 10801774.0
(22) Date of filing: 22.12.2010
(51) Int. Cl.: H01M 4/66, H01M 4/86, H01M 8/0234

(54) **MEMBRANE ELECTRODE ASSEMBLIES INCLUDING MIXED CARBON PARTICLES**
MEMBRANELEKTRODENANORDNUNGEN MIT GEMISCHTEM KOHLENSTOFFTEILCHEN.
ENSEMBLES MEMBRANE-ÉLECTRODE AVEC UN MÉLANGE DE PARTICULES DE CARBONE

(30) Priority: 22.12.2009 US 288950 P
(43) Date of publication of application: 31.10.2012
(73) Proprietor: 3M Innovative Properties Company, St. Paul, MN 55133-3427 (US)
(72) Inventor: HAUG, Andrew T.,, Saint Paul, Minnesota 55133-3427 (US)
(74) Representative: Herzog, Fiesser & Partner Patentanwälte PartG mbB
(86) International application number: PCT/US2010/061812
(87) International publication number: WO 2011/087846

(56) References cited:
- WO-A2-2004/102722
- JP-A- 2007 335 163
- US-A1- 2002 192 530

## Description

This invention was made with Government support under Cooperative Agreement DE-FG36-07GO17007 awarded by DOE. The Government has certain rights in this invention.

### Cross Reference To Related Application

This application claims the benefit of U.S. Provisional Patent Application No. 61/288950, filed December 22, 2009.

### Field of the Disclosure

This disclosure relates to gas permeable layers in fuel cell membrane electrode assemblies which comprise a mixture of first and second types of carbon particles, which may provide relatively hydrophilic and relatively hydrophobic pathways.

### Summary of the Disclosure

Briefly, the present disclosure provides a fuel cell membrane electrode assembly (MEA) comprising at least one gas permeable layer comprising a mixture of first and second types of carbon particles in a weight ratio of between 99:1 and 50:50 wherein said first type of carbon particle oxidizes at a lower rate than said second type of carbon particle. The first type of carbon particles is graphitized carbon particles. The second type of carbon particle is not graphitized carbon particles. In some embodiments, the MEA comprises the first and second types of carbon particles in a weight ratio of not more than 95:5. In some embodiments, the first type of carbon particle has a surface area of between 10 and 200 m²/g. In some embodiments, the second type of carbon particle has a surface area of between 200 and 1000 m²/g. In some embodiments, the gas permeable layer is a catalyst-containing cathode layer, a catalyst-containing anode layer, a gas diffusion layer (GDL) or a gas flowfield plate.

### Detailed Description

The present disclosure provides a fuel cell membrane electrode assembly comprising at least one gas permeable layer comprising a mixture of two different types of carbon particles WO 2004/102722 discloses gas diffusion layers having a carbon particle mixture of at least two populations of electrically conductive carbon.

### Membrane Electrode Assemblies

A membrane electrode assembly (MEA) or polymer electrolyte membrane (PEM) according to the present disclosure may be useful in an electrochemical cell such as a fuel cell. An MEA is the central element of a proton exchange membrane fuel cell, such as a hydrogen fuel cell. Fuel cells are electrochemical cells which produce usable electricity by the catalyzed combination of a fuel such as hydrogen and an oxidant such as oxygen. Typical MEA's comprise a polymer electrolyte membrane (PEM) (also known as an ion conductive membrane (ICM)), which functions as a solid electrolyte. One face of the PEM is in contact with an anode electrode layer and the opposite face is in contact with a cathode electrode layer. In typical use, protons are formed at the anode via hydrogen oxidation and transported across the PEM to the cathode to react with oxygen, causing electrical current to flow in an external circuit connecting the electrodes. Each electrode layer includes electrochemical catalysts, typically including platinum metal. The PEM forms a durable, non-porous, electrically non-conductive mechanical barrier between the reactant gases, yet it also passes H⁺ ions readily. Gas diffusion layers (GDL's) facilitate gas transport to and from the anode and cathode electrode materials and conduct electrical current. The GDL is both porous and electrically conductive, and is typically composed of carbon fibers. The GDL may also be called a fluid transport layer (FTL) or a diffuser/current collector (DCC). In some embodiments, the anode and cathode electrode layers are applied to GDL's and the resulting catalyst-coated GDL's sandwiched with a PEM to form a five-layer MEA. The five layers of a five-layer MEA are, in order: anode GDL, anode electrode layer, PEM, cathode electrode layer, and cathode GDL. In other embodiments, the anode and cathode electrode layers are applied to either side of the PEM, and the resulting catalyst-coated membrane (CCM) is sandwiched between two GDL's to form a five-layer MEA. The terms "electrode layer" and "catalyst layer" are used interchangeably as used herein.

The PEM according to the present disclosure may comprise any suitable polymer electrolyte. The polymer electrolytes useful in the present disclosure typically bear anionic functional groups bound to a common backbone, which are typically sulfonate groups (forming sulfonic acid groups when neutralized by protons) but may also include carboxylate groups (forming carboxylic acid groups when neutralized by protons), deprotonated imide groups, deprotonated sulfonamide groups, and deprotonated amide groups, or other functional groups that form acids with protonated. The polymer electrolytes useful in the present disclosure typically are highly fluorinated and most typically perfluorinated. The polymer electrolytes useful in the present disclosure are typically copolymers of tetrafluoroethylene and one or more fluorinated, acid-functional comonomers. Typical polymer electrolytes include Nafion® (DuPont Chemicals, Wilmington DE) and Flemion™ (Asahi Glass Co. Ltd., Tokyo, Japan). The polymer electrolyte may be a copolymer of tetrafluoroethylene (TFE) and FSO₂-CF₂CF₂CF₂CF₂-O-CF=CF₂, described in U.S. patent applications 10/322,254, 10/322,226 and 10/325,278. The polymer typically has an equivalent weight (EW) of 1200 or less and more typically 1100 or less. In some embodiments, polymers of unusually low EW can be used, typically 1000 or less, more typically 900 or less, and more typically 800 or less, often with improved performance in comparison to the use of higher EW polymer.

The polymer can be formed into a membrane by any suitable method. The polymer is typically cast from a suspension. Any suitable casting method may be used, including bar coating, spray coating, slit coating, brush coating, and the like. Alternately, the membrane may be formed from neat polymer in a melt process such as extrusion. After forming, the membrane may be annealed, typically at a temperature of 120 °C or higher, more typically 130 °C or higher, most typically 150 °C or higher. In some embodiments of the method according to the present disclosure, additives are added to the membrane only after annealing and not before, and therefore annealing conditions are not impacted by their presence, which may, e.g., raise membrane Tg, thus necessitating higher annealing temperatures. The PEM typically has a thickness of less than 50 microns, more typically less than 40 microns, more typically less than 30 microns, and most typically about 25 microns.

A PEM according to the present disclosure may additionally comprise a porous support, such as a layer of expanded PTFE or the like, where the pores of the porous support contain the polymer electrolyte. A PEM according to the present disclosure may comprise no porous support. A PEM according to the present disclosure may comprise a crosslinked polymer.

To make an MEA or CCM, catalyst may be applied to the PEM by any suitable means, including both hand and machine methods, including hand brushing, notch bar coating, fluid bearing die coating, wire-wound rod coating, fluid bearing coating, slot-fed knife coating, three-roll coating, or decal transfer. Coating may be achieved in one application or in multiple applications.

Any suitable catalyst may be used in the practice of the present disclosure. Typically, carbon-supported catalyst particles are used. Typical carbon-supported catalyst particles are 50-90% carbon and 10-70% catalyst metal by weight, the catalyst metal typically comprising Pt for the cathode and anode. In some embodiments, the catalyst metal comprises Pt and Ru in a weight ratio of between 1:2 and 4:1 for the anode. Typically, the catalyst is applied to the PEM or to the FTL in the form of a catalyst ink. Alternately, the catalyst ink may be applied to a transfer substrate, dried, and thereafter applied to the PEM or to the FTL as a decal. The catalyst ink typically comprises polymer electrolyte material, which may or may not be the same polymer electrolyte material which comprises the PEM. The catalyst ink typically comprises a dispersion of catalyst particles in a dispersion of the polymer electrolyte. The ink typically contains 3-40% solids (i.e. polymer and catalyst) and more typically 10-25% solids. The electrolyte dispersion is typically an aqueous dispersion, which may additionally contain alcohols and polyalcohols such a glycerin and ethylene glycol. The water, alcohol, and polyalcohol content may be adjusted to alter rheological properties of the ink. The ink typically contains 0-75% alcohol and 0-20% polyalcohol. In addition, the ink may contain 0-2% of a suitable dispersant. The ink is typically made by stirring with heat followed by dilution to a coatable consistency.

To make an MEA, GDL's may be applied to either side of a CCM by any suitable means. Any suitable GDL may be used in the practice of the present disclosure. Typically the GDL is comprised of sheet material comprising carbon fibers. Typically the GDL is a carbon fiber construction selected from woven and non-woven carbon fiber constructions. Carbon fiber constructions which may be useful in the practice of the present disclosure may include: Toray™ Carbon Paper, SpectraCarb™ Carbon Paper, AFN™ non-woven carbon cloth, Zoltek™ Carbon Cloth, and the like. The GDL may be coated or impregnated with various materials, including carbon particle coatings, hydrophilizing treatments, and hydrophobizing treatments such as coating with polytetrafluoroethylene (PTFE).

In use, the MEA according to the present disclosure is typically sandwiched between two rigid plates, known as distribution plates, also known as bipolar plates (BPP's) or monopolar plates. Like the GDL, the distribution plate must be electrically conductive. The distribution plate is typically made of a carbon composite, metal, or plated metal material. The distribution plate distributes reactant or product fluids to and from the MEA electrode surfaces, typically through one or more fluid-conducting channels engraved, milled, molded or stamped in the surface(s) facing the MEA(s). These channels are sometimes designated a flow field. The distribution plate may distribute fluids to and from two consecutive MEA's in a stack, with one face directing fuel to the anode of the first MEA while the other face directs oxidant to the cathode of the next MEA (and removes product water), hence the term "bipolar plate." Alternately, the distribution plate may have channels on one side only, to distribute fluids to or from an MEA on only that side, which may be termed a "monopolar plate." The term bipolar plate, as used in the art, typically encompasses monopolar plates as well. A typical fuel cell stack comprises a number of MEA's stacked alternately with bipolar plates.

### Mixed Carbon Particles

The present disclosure provides a fuel cell membrane electrode assembly comprising at least one gas permeable layer comprising a mixture of two different types of carbon particles. In some embodiments the two types of carbon particles oxidize at different rates resulting in a structure mixing discrete hydrophilic and hydrophobic regions. It is believed that such a structure may offer the benefit of good and tailorable water transport capabilities while maintaining good gas transport and electrical capabilities. In some embodiments, a first type of carbon particle is graphitized, and a second type of carbon is not graphitized. During fuel cell operation, high potential (typically above 1.2V vs. a hydrogen reference) may be applied, which is sufficient to oxidize the non-graphitized carbon, rendering it hydrophilic. Graphitized carbon has a much lower oxidation rate than non-graphitized carbon, and is therefore expected to remain hydrophobic.

In some embodiments, the first type of carbon particle has a surface area of less than 200 m²/g, typically between 10 and 200 m²/g, more typically between 30 and 150 m²/g, and more typically between 50 and 100 m²/g. In some embodiments, the second type of carbon particle has a surface area of greater than 200 m²/g, typically between 200 and 1000 m²/g, more typically between 300 and 1000 m²/g, and more typically between 400 and 1000 m²/g. surface areas are typically measured by BET method (Brunauer, Emmett, Teller method). In various embodiments, the carbon particles of the first type may be superficially graphitized, graphitized throughout, or graphitized to an intermediate degree.

A tailored two-carbon material according to the present disclosure may achieve good water transport and gas transport properties simultaneously. After oxidation, the dual carbon material creates discrete zones of liquid water and gas transport, achieving both good gas and liquid water transport. Upon oxidation, the dual layer carbon material can reach a state in which the non-graphitized material is oxidized, creating hydrophilic zones allowing easy water transport. Gas, however, could still easily transport through other areas of the material.

In some embodiments the first and second types of carbon particles are mixed to form an intimate blend before inclusion in an MEA layer. In some embodiments, each type is separately formed into a mass, e.g., by casting and drying, and then ground into particles of a desired size which are thereafter mixed to form a blend before inclusion in an MEA layer.

The weight ratio of the first and second types of carbon particles is not more than 99:1, in some embodiments not more than 95:5, and in some embodiments not more than 90: 10. The weight ratio of the first and second types of carbon particles is 50:50, and in some embodiments at least 75:25.

In some embodiments, the second type of carbon is oxidized during use in a fuel cell. In some embodiments, the second type of carbon is oxidized in a special step after incorporation in a fuel cell stack, such as by application of an electrical potential from an external source to the fuel cell. In some embodiments, the second type of carbon is oxidized after incorporation into an MEA but before incorporation into a fuel cell stack, e.g., by one or more of the following methods: by acid washing, by application of high potential, or by surface modification. In some embodiments, the second type of carbon is oxidized before incorporation into an MEA, e.g., by one or more of the following methods: by acid washing, by application of high potential, or by surface modification.

### MEA Layers Including Mixed Carbon Particles

The present disclosure provides a fuel cell membrane electrode assembly comprising at least one gas permeable layer comprising a mixture of two different types of carbon particles. The gas permeable layer may be one or more of: a catalyst-containing cathode layer, a catalyst-containing anode layer, a cathode-side GDL, an anode-side GDL, cathode-side gas flowfield plate, an anode-side gas flowfield plate, or an added layer such as a sublayer between a catalyst-containing cathode layer and a PEM, a sublayer between a catalyst-containing anode layer and a PEM, an interlayer between a catalyst-containing cathode layer and a GDL, an interlayer between a catalyst-containing anode layer and a GDL, a microporous or other surface layer on a cathode-side GDL, a microporous or other surface layer on an anode-side GDL.

The gas permeable layer comprising a mixture of two different types of carbon particles may additionally comprise, as appropriate, a catalyst material such as a platinum-containing catalyst. The gas permeable layer comprising a mixture of two different types of carbon particles may additionally comprise, as appropriate, additional hydrophobic material, such as a fluoropolymer, such as PTFE, FEP or Teflon® AF.

## Claims

1. A fuel cell membrane electrode assembly comprising at least one gas permeable layer comprising a mixture of first and second types of carbon particles in a weight ratio of between 99:1 and 50:50, wherein said first type of carbon particle oxidizes at a lower rate than said second type of carbon particle, wherein said first type of carbon particles is graphitized carbon particles, and wherein said second type of carbon particle is not graphitized carbon particles.

2. The fuel cell membrane electrode assembly according to claim 1 comprising said first and second types of carbon particles in a weight ratio of not more than 95:5.

3. The fuel cell membrane electrode assembly according to claim 1 wherein the first type of carbon particle has a surface area of between 10 and 200 m²/g.

4. The fuel cell membrane electrode assembly according to claim 1 wherein the second type of carbon particle has a surface area of between 200 and 1000 m²/g.

5. The fuel cell membrane electrode assembly according to claim 1 wherein said at least one gas permeable layer is a catalyst-containing cathode layer.

6. The fuel cell membrane electrode assembly according to claim 1 wherein said at least one gas permeable layer is a catalyst-containing anode layer.

7. The fuel cell membrane electrode assembly according to claim 1 wherein said at least one gas permeable layer is a gas diffusion layer (GDL).

8. The fuel cell membrane electrode assembly according to claim 1 wherein said at least one gas permeable layer is a gas flowfield plate.

## Patentansprüche

1. Brennstoffzellen-Membranelektrodenbaugruppe umfassend mindestens eine gasdurchlässige Schicht, umfassend eine Mischung aus ersten und zweiten Allen von Kohlenstoffteilchen in einem Gewichtsverhältnis von zwischen 99:1 und 50:50, wobei die erste Art von Kohlenstoffteilchen mit einer geringeren Geschwindigkeit oxidiert als die zweite Art von Kohlenstoffteilchen, wobei die erste Art von Kohlenstoffteilchen aus graphitierten Kohlenstoffteilchen besteht und wobei die zweite Art von Kohlenstoffteilchen aus nicht graphitierten Kohlenstoffteilchen besteht.

2. Brennstoffzellen-Membranelektrodenbaugruppe nach Anspruch 1, umfassend die ersten und zweiten Arten von Kohlenstoffteilchen in einem Gewichtsverhältnis von nicht mehr als 95:5.

3. Brennstoffzellen-Membranelektrodenbaugruppe nach Anspruch 1, wobei die erste Art von Kohlenstoffteilchen eine Oberfläche von zwischen 10 und 200 m²/g aufweist.

4. Brennstoffzellen-Membranelektrodenbaugruppe nach Anspruch 1, wobei die zweite Art von Kohlenstoffteilchen eine Oberfläche von zwischen 200 und 1000 m²/g aufweist.

5. Brennstoffzellen-Membranelektrodenbaugruppe nach Anspruch 1, wobei die mindestens eine gasdurchlässige Schicht eine katalysatorhaltige Kathodenschicht ist.

6. Brennstoffzellen-Membranelektrodenbaugruppe nach Anspruch 1, wobei die mindestens eine gasdurchlässige Schicht eine katalysatorhaltige Anodenschicht ist.

7. Brennstoffzellen-Membranelektrodenbaugruppe nach Anspruch 1, wobei die mindestens eine gasdurchlässige Schicht eine Gasdiffusionsschicht (GDL) ist.

8. Brennstoffzellen-Membranelektrodenbaugruppe nach Anspruch 1, wobei die mindestens eine gasdurchlässige Schicht eine Gasströmungsfeldplatte ist.

## Revendications

1. Ensemble membrane-électrodes pour pile à combustible comprenant au moins une couche perméable comprenant un mélange d'un premier et d'un second types de particules de carbone dans un rapport massique entre 99:1 et 50:50, dans lequel ledit premier type de particule de carbone s'oxyde moins vite que le second type de particule de carbone, dans lequel ledit premier type de particules de carbone est des particules de carbone graphiteux et dans lequel ledit second type de particule de carbone n'est pas des particules de carbone graphiteux.

2. Ensemble membrane-électrodes pour pile à combustible selon la revendication 1, comprenant lesdits premier et second types de particules de carbone dans un rapport massique n'excédant pas 95:5.

3. Ensemble membrane-électrodes pour pile à combustible selon la revendication 1, dans lequel le premier type de particule de carbone a une surface spécifique entre 10 et 200 m²/g.

4. Ensemble membrane-électrodes pour pile à combustible selon la revendication 1, dans lequel le second type de particule de carbone a une surface entre 200 et 1000 m²/g.

5. Ensemble membrane-électrodes pour pile à combustible selon la revendication 1, dans lequel ladite au moins une couche perméable aux gaz est une couche cathodique contenant un catalyseur.

6. Ensemble membrane-électrodes pour pile à combustible selon la revendication 1, dans lequel ladite au moins une couche perméable aux gaz est une couche anodique contenant un catalyseur.

7. Ensemble membrane-électrodes pour pile à combustible selon la revendication 1, dans lequel ladite au moins une couche perméable aux gaz est une couche de diffusion gazeuse (GDL).

8. Ensemble membrane-électrodes pour pile à combustible selon la revendication 1, dans lequel ladite au moins une couche perméable aux gaz est une plaque de champ de courant de gaz.
